# EUROPÄISCHE PATENTSCHRIFT

(11) **EP 2 587 185 B1**
(45) Veröffentlichungstag und Bekanntmachung des Hinweises auf die Patenterteilung: **15.01.2014**
(21) Anmeldenummer: 11186352.8
(22) Anmeldetag: 24.10.2011
(51) Int. Cl.: F24J 2/52

(54) **Verbindungsmittel, durch das Hohlprofile mit wenigstens einer Nut für Solaranlagen miteinander verbindbar sind, sowie ein Hohlprofilsystem für eine Solaranlage**
Connection means for connecting the hollow profile with at least one nut for solar assemblies with one another, and hollow profile system for a solar assembly
Moyens de connexion pouvant être connectés les uns aux autres par le profilé creux à l'aide d'au moins un écrou pour installations solaires, ainsi que système de profilé creux pour une installation solaire

(43) Veröffentlichungstag der Anmeldung: 01.05.2013
(73) Patentinhaber: Hafenbahn GmbH & Co. KG, 48431 Rheine (DE)
(72) Erfinder: Brinkmann, Manfred, 48431 Rheine (DE); Haase, Peer, 48429 Rheine (DE)
(74) Vertreter: Berkenbrink, Kai-Oliver

(56) Entgegenhaltungen:
- DE-A1- 2 024 508
- DE-A1- 3 713 167
- DE-A1- 19 614 902
- DE-U1-202007 008 471
- DE-U1-202009 007 245
- JP-A- 2001 164 713
- US-A- 1 051 427
- US-A- 3 004 784
- US-A- 5 144 780
- US-B1- 6 626 605

## Beschreibung

Die Erfindung betrifft ein Verbindungsmittel, durch das Hohlprofile mit wenigstens einer Nut für Solaranlagen miteinander verbindbar sind, sowie ein Hohlprofilsystem für eine Solaranlage, das solche Verbindungsmittel sowie Hohlprofile, die durch die Verbindungsmittel miteinander verbindbar sind, umfasst.

Photovoltaikelemente für Solaranlagen sind üblicherweise in einem Rahmen angeordnet. Zur Anordnung dieser Rahmen auf einem Untergrund, beispielsweise einem Solaraufsteller oder einen Dach, werden die Rahmen an Hohlprofilen befestigt. Diese Hohlprofile, die auch als Aufnahmeprofile bezeichnet werden, bestehen üblicherweise aus einem extrudierten Kunststoff- oder Metallhohlprofil mit einem H-förmigen Querschnitt. Durch die H-Form der Hohlprofile werden zwei gegenüberliegende Nuten ausgebildet, in die sogenannte Nutensteine einschiebbar sind. Diese Nutensteine weisen Innengewinde auf, in die Schrauben einschraubbar sind. Über die auf der einen Seite des Hohlprofils in die Nutensteine eingeschraubten Schrauben ist das Hohlprofil an einem Untergrund befestigbar und über die auf der anderen Seite des Hohlprofils in die Nutensteine eingeschraubten Schrauben mit dem Rahmen des Photovoltaikelementes befestigbar. Häufig ist es erwünscht, mehrere Hohlprofile in Längsrichtung fluchtend miteinander zu verbinden, um hierdurch ein Hohlprofilsystem einer beliebigen Länge erstellen zu können. Zur entsprechenden Verbindung mehrerer Profile miteinander werden Hohlprofile über Profilverbinder miteinander verbunden. Profilverbinder bestehen heutzutage üblicherweise aus Metallstäbchen, die in die Nuten benachbarter Profile eingeschoben werden und den Spalt benachbarter Hohlprofile überbrücken. Diese Stäbchen weisen Innengewinde auf, die derart angeordnet sind, dass in jedem der zu verbindenden Hohlprofile jeweils ein Gewinde angeordnet ist. In die Gewinde ist jeweils eine Schraube derart einschraubbar, dass die Stäbchen durch Schraubquetschung in der Nut gehalten werden, wodurch die Hohlprofile über die Stäbchen miteinander verbindbar sind.

Eine solche Verbindung ist beispielsweise aus der JP 2001 164713 A bekannt.

Grundsätzlich hat sich die Verbindung von Hohlprofilen für Solaranlagen mittels solcher Stäbchen zwar bewährt. Eine solche Verbindung weist jedoch mehrere Nachteile auf. So ist die Verbindung verhältnismäßig umständlich, da jedes Stäbchen einzeln in den Nuten der Hohlprofile zu verschrauben ist. Ferner kann die Schraubquetschung in den Nuten zu einem Verbiegen oder zu einer Beschädigung der Hohlprofile führen. Insbesondere ist jedoch auch nachteilig, dass die Nuten durch die Stäbchen unterbrochen werden, so dass beispielsweise in den Nuten geführte Befestigungsmittel, beispielsweise zur Befestigung von Photovoltaikelementen, nicht über benachbarte Hohlprofile hinweg in den Nuten verschoben werden können.

Der Erfindung liegt die Aufgabe zu Grunde, Verbindungsmittel, durch die Hohlprofile für Solaranlagen miteinander verbindbar sind, zur Verfügung zu stellen, durch die Hohlprofile einfacher miteinander verbindbar sind.

Ferner sollen die Verbindungsmittel zu keinem Verbiegen oder einer Beschädigung der Hohlprofile führen. Insbesondere ist es auch eine Aufgabe der Erfindung, solche Verbindungsmittel zur Verfügung zu stellen, durch die Hohlprofile derart miteinander verbindbar sind, dass die Nuten benachbarter, miteinander verbundener Hohlprofile durch die Verbindungsmittel nicht unterbrochen wird.

Vergleichbare Verbindungsmittel kommen auch bei der Verbindung von Pfostenabschnitten im Regalbau zur Anwendung, siehe dazu Dokument US 6,626,605 B1.

Zur Lösung dieser Aufgabe wird erfindungsgemäß zur Verfügung gestellt ein Verbindungsmittel, durch das Hohlprofile für Solaranlagen miteinander verbindbar sind, mit den folgenden Merkmalen:
einer Basisplatte;
die Basisplatte weist eine erste Hauptoberflächen und eine dieser gegenüberliegende, zweite Hauptoberfläche auf;
an der ersten Hauptoberfläche sind erste Klemmmittel zur klemmenden Verbindung des Verbindungsmittels mit einem Hohlprofil ausgebildet,
wobei die ersten Klemmmittel folgende Merkmale aufweisen:
   zwei beabstandet an der ersten Hauptoberfläche angeordnete Wangen;
   die Wangen erstrecken sich jeweils von der ersten Hauptoberfläche weg;
   die Wangen sind derart zueinander angeordnet, dass jede Wange jeweils wenigstens eine Seite aufweist, die der jeweils anderen Wange abgewandt ist;
   auf ihrer der anderen Wange jeweils abgewandten Seite weisen die Wangen jeweils Vorsprünge auf;
   die Maxima der Vorsprünge auf den jeweiligen Seiten der Wangen liegen jeweils in einer Ebene, die jeweils senkrecht zur ersten Hauptoberfläche verläuft;
   an der zweiten Hauptoberfläche sind zweite Klemmmittel zur klemmenden Verbindung des Verbindungsmittels mit einem Hohlprofil ausgebildet, wobei die zweiten Klemmmittel symmetrisch zu den ersten Klemmmitteln angeordnet sind;
   die Basisplatte weist wenigstens eine Einkerbung in dem Bereich auf, in dem die Nuten zweier durch das Verbindungsmittel miteinander verbindbaren Hohlprofile miteinander fluchten.

Eine Grundidee des erfindungsgemäßen Verbindungsmittels besteht darin, dass dieses nicht mehr durch Schraubquetschung im Hohlprofil gehalten wird, sondern in dieses einführbar und über Klemmmittel selbsttätig in diese einklemmbar ist. Hierdurch kann ein Verschrauben der Verbindungsmittel mit dem Hohlprofil vermieden werden. Ferner lässt sich durch ein solches Klemmen verhindern, dass die Hohlprofile verbogen oder beschädigt werden.

Eine weitere Grundidee des erfindungsgemäßen Verbindungsmittels liegt jedoch insbesondere auch darin, dass dieses derart gestaltet ist, dass die Nuten von durch das Verbindungsmittel fluchtend miteinander zu verbindender Hohlprofile durch das Verbindungsmittel nicht unterbrochen werden und die Nuten benachbarter Hohlprofile damit eine durchgehende Nut bilden können. Hierzu weist die Basisplatte wenigstens eine Einkerbung in dem Bereich auf, in dem die Nuten zweier durch das Verbindungsmittel miteinander zu verbindender Hohlprofile miteinander fluchten.

Durch das erfindungsgemäße Verbindungsmittel sind grundsätzlich beliebige Hohlprofile für Solaranlagen miteinander verbindbar, insbesondere solche Hohlprofile mit einem H-förmigen oder einem U-förmigen Querschnitt. Hohlprofile mit einem H-förmigem Querschnitt weisen zwei gegenüberliegende Nuten auf, während U-Profile mit einem U-förmigen Querschnitt eine einzige Nut aufweisen. Die über das erfindungsgemäße Verbindungsmittel miteinander verbindbaren Hohlprofile können insbesondere extrudierte Kunststoff- oder Metallhohlprofile sein.

Die Basisplatte des Verbindungsmittels dient insbesondere auch als Anschlag für die durch das Verbindungsmittel miteinander verbindbaren Hohlprofile. Die Basisplatte ist derart ausgebildet, dass ein Hohlprofil mit seiner Stirnfläche an die erste Hauptoberfläche der Basisplatte anschlagbar ist und ein zweites Hohlprofil, das durch das Verbindungsmittel mit dem ersten Verbindungsmittel verbunden werden soll, mit seiner Stirnfläche an die zweite, der ersten Hauptoberfläche gegenüberliegende zweite Hauptoberfläche der Basisplatte anschlagbar ist. Indem die Hohlprofile mit ihren Stirnflächen jeweils an die Hauptoberflächen der Basisplatte anschlagbar sind, ermöglicht die Basisplatte eine Justierung beziehungsweise Ausrichtung der Hohlprofile zueinander.

Als Hauptoberflächen der Basisplatte werden die zwei großen Flächen der Basisplatte bezeichnet. Die beiden Hauptoberflächen der Basisplatte sind durch die umlaufende Seitenkante der Basisplatte miteinander verbunden.

Die erste und zweite Hauptoberfläche der Basisplatte verlaufen bevorzugt eben und parallel zueinander. Eine solche Ausrichtung der beiden Hauptoberflächen ermöglicht es, zwei Hohlprofile in Längsrichtungen miteinander zu verbinden. Nach einer alternativen Ausführungsform kann jedoch auch vorgesehen sein, dass die zwei Hauptoberflächen der Basisplatte schräg beziehungsweise winkelig zueinander verlaufen. Die Basisplatte weist in diesen Fall eine keilförmige Gestalt auf. Eine solche Ausbildung der Basisplatte ermöglicht es, dass die durch das Verbindungsmittel miteinander zu verbindenden Hohlprofile in einem definierten Winkel zueinander angeordnet werden.

An der ersten Hauptoberfläche sind erste Klemmmittel zur klemmenden Verbindung des Verbindungsmittels mit einem Hohlprofil ausgebildet, und an der zweiten Hauptoberfläche sind zweite Klemmmittel zur klemmenden Verbindung des Verbindungsmittels mit einem weiteren Hohlprofil ausgebildet. Die Klemmmittel sein jeweils derart ausgebildet, dass sie im inneren freien Hohlraum der Hohlprofile, in den sie eingeführt sind, fest klemmen. Hierdurch lassen sich zwei Hohlprofile über das Verbindungsmittel klemmend miteinander verbinden. Ein besonderer Vorteil des erfindungsgemäßen Verbindungsmittels besteht insbesondere auch darin, dass die Hohlprofile durch das Verbindungsmittel zum einen gegeneinander justierbar sind, da die Basisplatte einen Anschlag für die jeweilige Stirnflächen der Hohlprofile bildet, und die Hohlprofile gleichzeitig durch die Klemmmittel des Verbindungselementes miteinander verbindbar sind.

Die an der ersten Hauptoberfläche ausgebildeten ersten Klemmmittel weisen zwei beabstandet an der ersten Hauptoberfläche angeordnete Wangen auf. Diese Wangen können bevorzugt plattenförmig oder stegförmig gestaltet sein. Die Wangen sind derart ausgebildet, dass sie in eine endseitige Öffnung eines Hohlprofils einführbar sind. Extrudierte Hohlprofile münden an ihren zwei Stirnseiten jeweils in den inneren Hohlraum des Hohlprofils. Die Klemmmittel des erfindungsgemäßen Verbindungsmittels sind nunmehr derart gestaltet, dass diese in diesen Hohlraum einführbar sind. Dies unterscheidet die Klemmmittel nachhaltig von den bisher zur Verbindung von Hohlprofilen benutzten Stäbchen, die nicht in den freien Hohlraum im Inneren der Hohlprofile, sondern allein in die Nuten einführbar waren. Diese Einführung in die Nuten der Stäbchen war, wie zuvor ausgeführt, auch zwingend notwendig, da ansonsten keine Schraube zur Befestigung der Stäbchen in den Nuten in die Stäbchen hätten eingeschraubt werden können.

Die Wangen weisen auf ihren voneinander abgewandten Seiten Vorsprünge auf. Diese Vorsprünge dienen insbesondere auch dazu, sich im inneren freien Hohlraum der Hohlprofile zu "verkrallen". Die Maxima der Vorsprünge, also ihre höchsten Punkte beziehungsweise ihre "Gipfel", liegen jeweils in einer Ebene, die jeweils senkrecht zur ersten Hauptoberfläche verläuft. Mit anderen Worten: Die Maxima der Vorsprünge, die an einer Wange angeordnet sind, liegen in einer ersten Ebene und die Maxima der Vorsprünge, die an der zweiten Wange angeordnet sind, liegen in einer zweiten Ebene, wobei beide Ebenen jeweils senkrecht zur ersten Hauptoberfläche verlaufen.

Die Vorsprünge auf den Wangen sind derart ausgebildet, dass sie gegen die innere Wandung eines Hohlprofils anliegen, wenn die Wangen in den inneren Hohlraum eines Hohlprofils eingeführt sind. Die Klemmmittel sind dabei derart ausgebildet, dass sie mit ihren Vorsprüngen unter Klemmwirkung gegen die innere Wandung der Hohlprofile anliegen. Hierdurch kann ein unbeabsichtigtes Lösen oder Verrutschen der Hohlprofile aus dem Verbindungsmittel verhindert werden. Die konkrete Gestaltung und Geometrie des Verbindungsmittels beziehungsweise der Klemmmittel ist dabei an die jeweilige Geometrie der zu verbindenden Hohlprofile angepasst.

Die auf den einander abgewandten Seiten der Wangen angeordneten Vorsprünge können grundsätzlich eine beliebige Form aufweisen. Beispielsweise können die Vorsprünge noppenförmig oder pyramidenförmig gestaltet sein. Nach einer besonders bevorzugten Ausführungsverordnung sind die Vorsprünge rippenförmig beziehungsweise in Form sich längs erstreckender Erhebungen gestaltet, wobei diese Rippen beziehungsweise sich die längs erstreckenden Erhebungen bevorzugt beabstandet zueinander und parallel zur ersten Hauptoberfläche verlaufen. Die Maxima entsprechend gestalteter Vorsprünge verlaufen bei dieser Ausführungsform in Form von Graten beziehungsweise linienförmigen Maxima, die parallel zur ersten Hauptoberfläche verlaufen.

Eine Ausführungsform, bei der die Maxima der Vorsprünge gratförmig und parallel zur ersten Hauptoberfläche verlaufen, erlaubt eine besonders gute Klemmung der Klemmmittel in einem Hohlprofil.

Indem die Maxima der Vorsprünge jeweils in einer Ebene liegen, die senkrecht zur ersten Hauptoberfläche verläuft, lassen sich die Klemmmittel besonders einfach in die endseitigen Öffnungen der Hohlprofile einführen.

An der zweiten Hauptoberfläche sind die zweiten Klemmmittel zur klemmenden Verbindung des Verbindungsmittels mit einem weiteren Hohlprofil ausgebildet. Die zweiten Klemmmittel sind entsprechend den ersten Klemmmitteln ausgebildet und in Bezug auf die zweite Hauptoberfläche entsprechend den ersten Klemmmitteln in Bezug auf die erste Hauptoberfläche gestaltet. Ferner sind die zweiten Klemmmittel symmetrisch zu den ersten Klemmmitteln ausgebildet, und zwar insbesondere spiegelsymmetrisch zu einer Spiegelebene, die sich entlang der Ebene der Basisplatte erstreckt.

Indem die ersten und zweiten Klemmmittel jeweils entsprechend und symmetrisch auf den beiden Hauptoberflächen der Basisplatte angeordnet sind, ist auch die Klemmwirkung der ersten und zweiten Klemmmittel jeweils gleichwirkend. Dies hat den Vorteil einer einfachen Verwendung des Verbindungsmittels, da es gleichgültig ist, welches Klemmmittel in welches der zu verbindenden Hohlprofile eingeführt wird.

Die Basisplatte weist wenigstens eine Einkerbung in dem Bereich auf, in dem die Nuten zweier durch das Verbindungsmittel miteinander verbindbaren Hohlprofile miteinander fluchten beziehungsweise längs ineinander münden. Mit anderen Worten: Die Basisplatte weist wenigstens eine Einkerbung auf, die derart ausgebildet ist, dass die Längsnuten zweier Hohlprofile, die durch das Verbindungsmittel miteinander verbunden sind, ohne Unterbrechung durch das Verbindungsmittel beziehungsweise die Basisplatte ineinander übergehen. Bevorzugt weist die Basisplatte die wenigstens eine Einkerbung in dem Bereich auf, der zwischen den Bereichen liegt, an denen die Wangen an den beiden Hauptoberflächen an der Basisplatte angeordnet sind.

Der besondere Vorteil dieser Einkerbungen liegt darin, dass das Verbindungsmittel die längs aneinander stoßenden Nuten miteinander verbundener Hohlprofile nicht unterbricht, so dass beispielsweise Befestigungsmittel von der Nut eines ersten Hohlprofils in die Nut eines zweiten Hohlprofils, das mit dem ersten Hohlprofil über das Verbindungselement verbunden ist, geschoben werden können. Bevorzugt weist die Basisplatte nur eine einzige Einkerbung auf, soweit durch das Verbindungsmittel Hohlprofile mit einer Nut (also Hohlprofile mit einem U-förmigen Querschnitt) miteinander verbindbar sein sollen, und zwei Einkerbungen, insbesondere gegenüberliegende Einkerbungen, soweit durch das Verbindungsmittel Hohlprofile mit zwei gegenüberliegenden Nuten (also Hohlprofile mit einem H-förmigen Querschnitt) miteinander verbunden werden sollen.

Soweit die Basisplatte eine einzige Einkerbung aufweist, kann die Basisplatte beispielsweise im Wesentlichen U-förmig gestaltet sein, wobei die Wangen jeweils im Bereich der Schenkel des U angeordnet sind.

Soweit die Basisplatte zwei Einkerbungen aufweist, kann die Basisplatte beispielsweise im Wesentlichen H-förmig gestaltet sein, wobei die Wangen wiederum im Bereich der Schenkel des H angeordnet sein können.

Die Einkerbungen erstrecken sich jeweils von der Seitenkante der Basisplatte in den inneren Bereich der Basisplatte hinein. Bevorzugt haben die Einkerbungen eine rechteckige oder im Wesentlichen rechteckige Form, so dass sie den Nuten, die in der Regel ebenfalls einen im Wesentlichen rechteckigen Querschnitt aufweisen, ideal angepasst sind. Insbesondere kann vorgesehen sein, dass die Form der Einkerbungen dem Querschnitt der Nuten der Hohlprofile, die durch das erfindungsgemäße Verbindungsmittel miteinander verbindbar sind entspricht.

Der einfache Aufbau des Verbindungsmittels erlaubt es, dass dieses beispielsweise als einstückiges Kunststoffspritzgussteil ausgebildet sein kann. Indem das Verbindungsmittels mittels Kunststoffspritzguss einstückig ausbildbar ist, kann es sehr kostengünstig hergestellt werden.

Als besonders bevorzugter Werkstoff für das Verbindungsmittel hat sich insbesondere Polyethylen hoher Dichte (HDPE) herausgestellt.

Nach einer bevorzugten Ausführungsform ist vorgesehen, dass die Vorsprünge elastisch ausgebildet sind. Hierzu können beispielsweise die Vorsprünge selbst aus einem elastischen Material bestehen, beispielsweise Gummi oder Kautschuk. Alternativ oder kumulativ können jedoch beispielsweise auch die Wangen selbst elastisch ausgebildet sein.

Indem die Vorsprünge elastisch ausgebildet sind, können die Klemmmittel unter elastischer Vorspannung an der inneren Wandung der Hohlprofile anliegen. Hiermit ist eine besonders feste Klemmwirkung der Klemmmittel ausbildbar.

Zur Erzielung einer guten Klemmwirkung kann vorgesehen sein, dass die Wangen des ersten Klemmmittels jeweils derart ausgebildet sind, dass sie unter Überwindung einer elastischen Kraft aufeinander zubewegbar sind. Insoweit kann beispielsweise vorgesehen sein, dass die Klemmmittel derart an die Hohlprofile, die durch das Verbindungsmittel miteinander verbindbar sind, angepasst sind, dass die Wangen in dem in die Hohlprofile beziehungsweise deren freien inneren Hohlraum eingeführten Zustand aufeinander zubewegt sind, so dass sie mit Kraft beziehungsweise unter Vorspannung gegen die innere Wandung der Hohlprofile anliegen. Hierdurch sind die Klemmmittel besonders fest in die Hohlprofile klemmbar.

Es kann vorgesehen sein, dass die Wangen des ersten Klemmmittels auf ihren einander zugewandten Seiten Versteifungsmittel aufweisen. Durch diese Versteifungsmittel ist es möglich, dass die Wangen zwar elastisch aufeinander zubewegbar sind, hierdurch jedoch eine höhere Kraft überwunden werden muss, so dass die Wangen eine besonders hohe Klemmwirkung entfalten. Beispielsweise können Versteifungsmittel in Form von Versteifungsrippen oder Versteifungsplatten vorgesehen sein, die im Zwickel zwischen den Wangen und der ersten Hauptoberfläche angeordnet sind. Bevorzugt sind die Versteifungsmittel einerseits an der ersten Hauptoberfläche und andererseits an der Seite der Wangen angeordnet, die der jeweils anderen Wange zugewandt ist.

Sämtliche der vorbezeichneten Merkmale des erfindungsgemäßen Verbindungsmittels sind, einzeln, oder in Kombination beliebig miteinander kombinierbar.

Soweit die hierin gemachten Ausführungen die Ausbildung und Wirkung der ersten Klemmmittel betreffen, gelten diese Ausführungen für die zweiten Klemmmittel gleichermaßen. Die zweiten Klemmmittel sind demnach entsprechend den ersten Klemmmitteln ausgebildet und derart in Bezug zur und an der zweiten Hauptoberfläche angeordnet, wie die ersten Klemmmittel in Bezug zur und an der ersten Hauptoberfläche angeordnet sind.

Ein Ausführungsbeispiel des erfindungsgemäßen Verbindungsmittels sowie des Hohlprofilsystems soll anhand des in den Figuren dargestellten Ausführungsbeispieles näher verdeutlicht werden.

Dabei zeigt
- Figur 1: eine perspektivische Darstellung eines Verbindungsmittels,
- Figur 2: das Verbindungsmittel gemäß Figur 1 in einer Frontalansicht von vorne,
- Figur 3: das Verbindungsmittel gemäß Figur 1 in einer Frontalansicht von rechts,
- Figur 4: das Verbindungsmittel gemäß Figur 1 in einer Frontalansicht von oben,
- Figur 5: eine perspektivische Darstellung eines Hohlprofils,
- Figur 6: das Verbindungsmittel gemäß Figur 1 beim Einführen in ein Hohlprofil gemäß Figur 5,
- Figur 7: ein in ein Hohlprofil nach Figur 5 eingeführtes Verbindungsmittel gemäß Figur 1 und
- Figur 8: zwei durch ein Verbindungsmittel gemäß Figur 1 miteinander verbundene Hohlprofile gemäß Figur 5, die ein Hohlprofilsystem bilden.

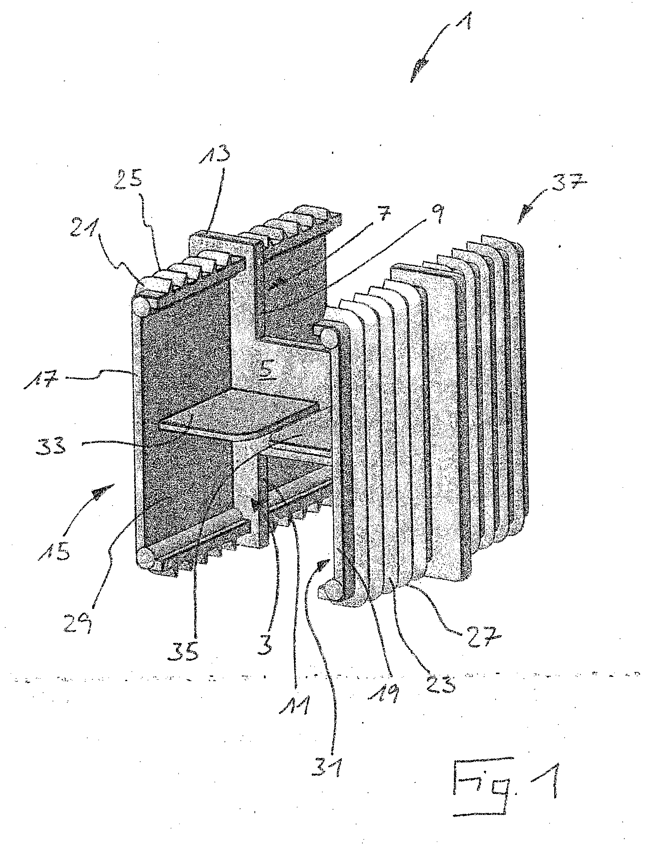

Das in seiner Gesamtheit in Figur 1 mit dem Bezugszeichen 1 gekennzeichnete Verbindungsmittel 1 weist eine Basisplatte 3 mit einer ersten Hauptoberfläche 5 und einer zweiten (in Figur 1 nicht erkennbaren) zweiten Hauptoberfläche 7 auf. Die Hauptoberflächen 5, 7 verlaufen parallel zueinander Die Basisplatte 3 weist eine erste, in Figur 1 obere Einkerbung 9 und eine zweite, in Figur 1 untere Einkerbung 11 auf. Die Einkerbungen 9, 11 weisen jeweils die gleiche, rechteckige Form auf und erstrecken sich jeweils von der Seitenkante 13 der Basisplatte 3 in das Innere der Basisplatte 3 hinein. Insgesamt weist die Basisplatte 3 hierdurch eine H-förmige Gestalt auf. An der ersten Hauptoberfläche 5 sind erste Klemmmittel 15 ausgebildet. Die ersten Klemmmittel 15 weisen zwei plattenförmige Wangen 17, 19 auf, wobei jeweils eine Wange 17, 19 an einem Schenkel der H-förmigen Basisplatte 3 angeordnet ist. Die Wangen 17, 19 verlaufen im Wesentlichen parallel zueinander. Auf ihren einander abgewandten Seiten weisen die Wangen 17, 19 jeweils Vorsprünge 21, 23 in Form von Rippen auf, die beabstandet zueinander parallel zur Hauptoberfläche 5 verlaufen. Die Maxima der Vorsprünge 21, 23 sind als Grate 25, 27 ausgebildet, wobei die Grate 25 der Vorsprünge 21 der einen Wange 17 in einer Ebene liegen, die senkrecht zur ersten Hauptoberfläche 3 verläuft und die Grate 27 der Vorsprünge 23 der zweiten Wange 19 in einer weiteren Ebene liegen, die senkrecht zur ersten Hauptoberfläche 5 verläuft. Die beiden Ebenen, in denen die Grate 25, 27 liegen, verlaufen parallel zueinander.

Die Vorsprünge 21, 23 sind an den Seitenkanten der Wangen 17, 19 noch ein Stück um diese herum geführt.

Die Wangen 17, 19 weisen einander zugewandte Seiten 29, 31 (in Figur 1 nicht zu erkennen) auf. Im Zwickel zwischen der ersten Hauptoberfläche 5 und den einander zugewandten Seitenflächen 29, 31 der Wangen 17, 19 ist jeweils ein Versteifungsmittel 33, 35 in Form einer Platte angeordnet, die jeweils auf der ersten Hauptoberfläche 5 und der jeweiligen Seitenfläche 29, 31 befestigt ist.

Auf der zweiten Hauptoberfläche 7 sind zweite Klemmmittel 37 ausgebildet, die entsprechend und spiegelsymmetrisch zu den ersten Klemmmitteln 15 ausgebildet sind. Die Symmetrieebene verläuft entlang der Haupterstreckung der Basisplatte 3, im Ausführungsbeispiel also parallel zur ersten und zweiten Hauptoberfläche 5, 7 mittig durch die Basisplatte 3.

Das Verbindungselement 1 ist als einstückiges Kunststoffspritzgussteil aus HDPE ausgebildet.

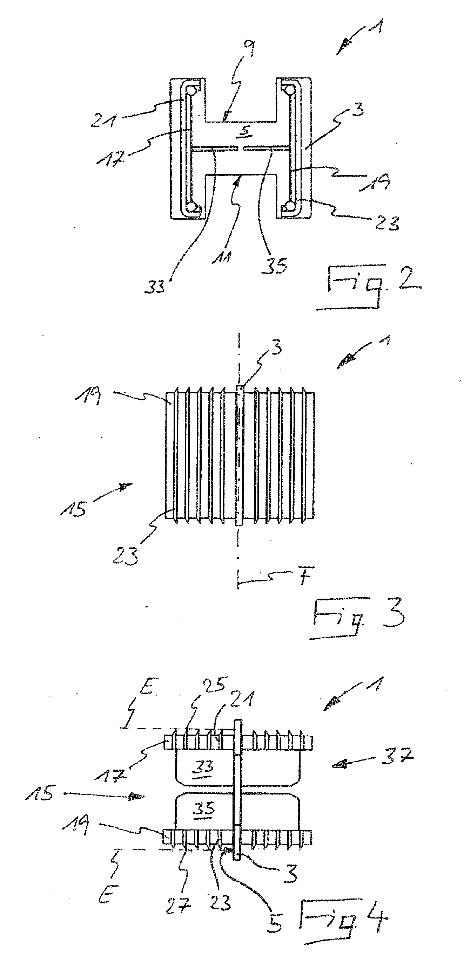

Die Ansicht auf das Verbindungsmittel 1 gemäß Figur 2 ist frontal auf die Basisplatte 3. Gut ist hier insbesondere auch die H-förmige Gestalt der Basisplatte 3.

Figur 3 zeigt eine Frontalansicht auf das Verbindungsmittel 1 von der Seite, also auf die äußere Seitenfläche der Wange 19 des ersten Klemmmittels 15 und die äußere Seitenfläche der zu dieser Wange 19 spiegelsymmetrischen Wange des zweiten Klemmmittels 37. Die Symmetrieebene F ist durch eine strichpunktierte Linie angedeutet.

In der Darstellung nach Figur 4, die eine Ansicht auf das Verbindungsmittel 1 von oben darstellt, ist insbesondere auch zu erkennen, dass die Grate 25, 27 der Vorsprünge 21, 23 der Wangen 17, 19 jeweils in einer Ebene liegen, angedeutet durch gestrichelte Linien E, die jeweils senkrecht zur ersten Hauptoberfläche 5 verlaufen.

Die Einkerbungen 9, 11 in der Basisplatte 3 sind derart ausgebildet, dass durch das Verbindungsmittel 1 zwei Profile mit einem H-förmigen Querschnitt, also mit gegenüberliegenden Nuten, derart miteinander verbindbar sind, dass die miteinander fluchtenden Nuten der über das Verbindungsmittel miteinander verbundenen Hohlprofile nicht durch das Verbindungsmittel 1 unterbrochen werden, so dass diese miteinander fluchtenden Nuten einen durchgehende Nut bilden. Hierzu weisen die Einkerbungen 9, 11 im Wesentlichen die Form des Querschnittes der Nuten der über das Verbindungsmittel 1 miteinander verbindbaren Hohlprofile auf.

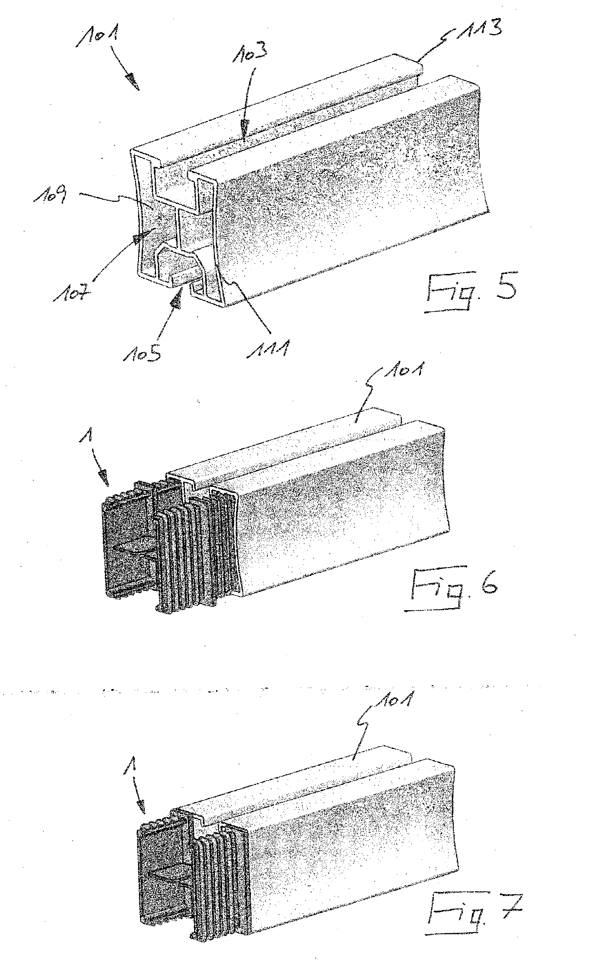

Ein Ausführungsbeispiel eines Hohlprofils, das mit einem weiteren, entsprechend ausgebildeten Hohlprofil über das Verbindungsmittel 1 verbindbar ist, ist in Figur 5 dargestellt. Bei dem dargestellten Hohlprofil 101 handelt es sich um ein extrudiertes Kunststoffhohlprofil mit zwei gegenüberliegenden Nuten 103, 105. Das Hohlprofil 101 weist damit einen im Wesentlichen H-förmigen Querschnitt auf. An den zwei Stirnflächen 111, 113 ist das Hohlprofil 101 - wie alle extrudierten Hohlprofile - offen, so dass der innere freie Hohlraum 107 des Hohlprofiles 101 von dort zugänglich ist. Der innere Hohlraum 107 des Hohlprofiles ist von Wandungen 107 begrenzt.

Zur Verbindung zweier Hohlprofile 101 miteinander wird ein Verbindungsmittel 1 gemäß Figur 1 zunächst mit einem seiner beiden Klemmmittel 15, 37 im Bereich der Stirnflächen 111, 113 in den inneren Hohlraum 107 des Hohlprofils 101 eingeführt. In Figur 6 ist dargestellt, wie die Klemmmittel 37 des Verbindungsmittels 1 im Bereich der Stirnfläche 111 in den inneren Hohlraum 107 eingeführt werden.

Das Verbindungsmittel 1 wird mit seinen zweiten Klemmmitteln 37 so weit in das Hohlprofil 101 eingeführt, bis das Hohlprofil 101 mit seiner Stirnfläche 111 an die zweite Hauptoberfläche 7 anschlägt, wie in Figur 7 dargestellt.

Anschließend wird das Verbindungsmittel 1 mit seinen ersten Klemmmitteln 15 entsprechend in den inneren Hohlraum eines zweiten Hohlprofil 201, das entsprechend dem ersten Hohlprofil 101 gestaltet ist, eingeführt, bis das Hohlprofil 201 mit seiner Stirnfläche gegen die erste Hauptoberfläche 5 anschlägt. Das Hohlprofil 201 weist gegenüberliegende Nuten 203, 205 auf.

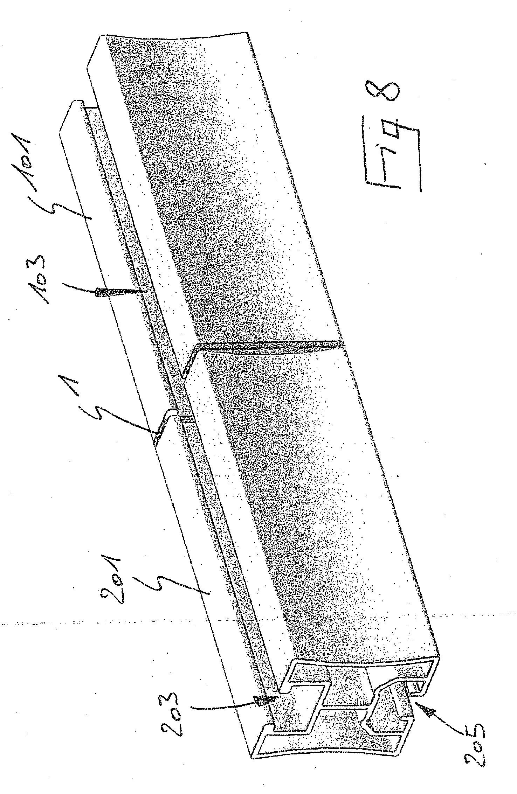

Wie Figur 8 zeigt, entsprechen die Einkerbungen 9, 11 in der Basisplatte 3 des Verbindungsmittels 1 im Wesentlichen der Form des Querschnittes der Nuten 103, 105 des Hohlprofils 101 und den identisch ausgebildeten Nuten 203, 205 des Hohlprofils 201, so dass die miteinander fluchtenden Nuten 103, 105, 203, 205 der Hohlprofile 101, 201 eine durchgehende Nut bilden, die durch das Verbindungsmittel 1 nicht unterbrochen wird.

## Patentansprüche

1. Verbindungsmittel, durch das Hohlprofile (101, 201) mit wenigstens einer Nut (103, 105, 203, 205) für Solaranlagen miteinander verbindbar sind, mit folgenden Merkmalen:
1.1 einer Basisplatte (3);
1.2 die Basisplatte (3) weist eine erste Hauptoberfläche (5) und eine dieser gegenüberliegende, zweite Hauptoberfläche (7) auf;
1.3 an der ersten Hauptoberfläche (5) sind erste Klemmmittel (15) zur klemmenden Verbindung des Verbindungsmittels mit einem Hohlprofil (101, 105) ausgebildet, wobei die ersten Klemmmittel (15) folgende Merkmale aufweisen:
1.3.1 zwei beabstandet an der ersten Hauptoberfläche (5) angeordnete Wangen (17, 19);
1.3.2 die Wangen (17, 19) erstrecken sich jeweils von der ersten Hauptoberfläche (5) weg;
1.3.3 die Wangen (17, 19) sind derart zueinander angeordnet, dass jede Wange (17, 19) jeweils wenigstens eine Seite aufweist, die der jeweils anderen Wange (17, 19) abgewandt ist;
1.3.4 auf ihrer der anderen Wange (17, 19) jeweils abgewandten Seite weisen die Wangen (17, 19) jeweils Vorsprünge (21, 23) auf;
1.3.5 die Maxima (25, 27) der Vorsprünge (21, 23) auf den jeweiligen Seiten der Wangen (17, 19) liegen jeweils in einer Ebene (E), die jeweils senkrecht zur ersten Hauptoberfläche (5) verläuft;
1.4 an der zweiten Hauptoberfläche (7) sind zweite Klemmmittel (37) zur klemmenden Verbindung des Verbindungsmittels mit einem Hohlprofil (101, 201) ausgebildet, wobei die zweiten Klemmmittel (37) symmetrisch zu den ersten Klemmmitteln (15) angeordnet sind;
1.5 die Basisplatte (3) weist wenigstens eine Einkerbung (9, 11) in dem Bereich auf, in dem die Nuten (103, 105, 203, 205) zweier durch das Verbindungsmittel miteinander verbindbaren Hohlprofile (101, 201) miteinander fluchten.

2. Verbindungsmittel nach wenigstens einem der vorhergehenden Ansprüche, bei dem die Basisplatte (3) H-förmig ausgebildet ist.

3. Verbindungsmittel nach Anspruch 1, das als einstückiges Kunststoffspritzgussteil ausgebildet ist.

4. Verbindungsmittel nach wenigstens einem der vorhergehenden Ansprüche, bei dem die erste und zweite Hauptoberfläche (5, 7) parallel zueinander verlaufen.

5. Verbindungsmittel nach wenigstens einem der vorhergehenden Ansprüche, bei dem die zwei Ebenen (E) des ersten Klemmmittels (15), in denen die Maxima (25, 27) der Vorsprünge (21, 23) jeweils liegen, parallel zueinander verlaufen.

6. Verbindungsmittel nach wenigstens einem der vorhergehenden Ansprüche, bei dem die Vorsprünge (21, 23) elastisch ausgebildet sind.

7. Verbindungsmittel nach wenigstens einem der vorhergehenden Ansprüche, bei dem die Maxima (25, 27) der Vorsprünge (21, 23) Grate (25, 27) bilden, die parallel zur jeweiligen Hauptoberfläche (5, 7) verlaufen.

8. Verbindungsmittel nach wenigstens einem der vorhergehenden Ansprüche, bei dem die Wangen (17, 19) des ersten Klemmmittels (15) und des zweiten Klemmmittels (37) jeweils unter Überwindung einer elastischen Kraft aufeinander zubewegbar sind.

9. Verbindungsmittel nach wenigstens einem der vorhergehenden Ansprüche, bei dem die Wangen (17, 19) auf ihren einander zugewandten Seiten Versteifungsmittel (33, 35) aufweisen.

10. Hohlprofilsystem für eine Solaranlage, umfassend Verbindungsmittel (1) nach wenigstens einem der vorhergehenden Ansprüche und Hohlprofile (101, 201), die durch die Verbindungsmittel (1) miteinander verbindbar sind.

## Claims

1. A connecting device, by means of which hollow profiles (101, 201) with at least one slot (103, 105, 203, 205) for solar installations can be connected to one another, with the following features:
1.1 a base plate (3);
1.2 the base plate (3) has a first main surface (5) and a second main surface (7) opposite the same;
1.3 first clamping means (15) for clamping connection of the connecting device to a hollow profile (101, 105) are constructed on the first main surface (5), wherein the first clamping means (15) have the following features:
1.3.1 two side walls (17, 19) arranged spaced apart on the first main surface (5);
1.3.2 the side walls (17, 19) extend away from the first main surface (5) in each case;
1.3.3 the side walls (17, 19) are arranged in such a manner with respect to one another that each side wall (17, 19) has at least one side in each case, which faces away from the respective other side wall (17, 19);
1.3.4 the side walls (17, 19) have projections (21, 23) in each case on the side thereof facing away from the other side wall (17, 19) in each case;
1.3.5 the peaks (25, 27) of the projections (21, 23) on the respective sides of the side walls (17, 19) in each case lie in a plane (E) which runs perpendicularly to the first main surface (5) in each case;
1.4 second clamping means (37) for clamping connection of the connecting device to a hollow profile (101, 201) are constructed on the second main surface (7), wherein the second clamping means (37) are arranged symmetrically to the first clamping means (15);
1.5 the base plate (3) has at least one notch (9, 11) in the region in which the slots (103, 105, 203, 205) of two hollow profiles (101, 201), which can be connected to one another by means of the connecting device, align with one another.

2. The connecting device according to at least one of the preceding claims, in which the base plate (3) is of H-shaped construction.

3. The connecting device according to Claim 1, which is constructed in one piece as a plastic injection moulding.

4. The connecting device according to at least one of the preceding claims, in which the first and second main surfaces (5; 7) run parallel to one another.

5. The connecting device according to at least one of the preceding claims, in which the two planes (E) of the first clamping means (15), in which the peaks (25, 27) of the projections (21, 23) lie in each case, run parallel to one another.

6. The connecting device according to at least one of the preceding claims, in which the projections (21, 23) are constructed elastically.

7. The connecting device according to at least one of the preceding claims, in which the peaks (25, 27) of the projections (21, 23) form ridges (25, 27) which run parallel to the respective main surface (5, 7).

8. The connecting device according to at least one of the preceding claims, in which the side walls (17, 19) of the first clamping means (15) and of the second clamping means (37) can be moved towards one another in each case whilst overcoming an elastic force.

9. The connecting device according to at least one of the preceding claims, in which the side walls (17, 19) have reinforcing means (33, 35) on the mutually facing sides thereof.

10. A hollow profile system for a solar installation, comprising connecting devices (1) according to at least one of the preceding claims and hollow profiles (101, 201), which can be connected to one another by means of the connecting devices (1).

## Revendications

1. Moyens de liaison raccordables entre eux par le profil creux (101, 201) avec au moins une rainure (103, 105, 203, 205) pour installations solaires avec les caractéristiques suivantes
1.1 une plaque de base (3) :
1.2 la plaque de base (3) présente une première surface supérieure principale (5) et une deuxième surface supérieure principale (7) opposée à celle-ci;
1.3 sur la première surface supérieure principale (5), les premiers moyens de serrage (15) pour la liaison effectuant serrage du moyen de liaison sont constitués avec un profil creux (101, 105), les premiers moyens de serrage (15) présentant les caractéristiques suivantes :
1.3.1 deux flasques (17, 19) disposés à distance sur la première surface supérieure principale (5),
1.3.2 les flasques (17, 19) s'étendent à chaque fois depuis la première surface supérieure principale (5),
1.3.3 les flasques (17, 19) sont disposés les uns par rapport aux autres de telle sorte que chaque flasque (17, 19) présente à chaque fois au moins un côté qui est écarté de chaque autre flasque (17, 19),
1.3.4 sur leur côté à chaque fois écarté de l'autre flasque (17, 19), les flasques (17, 19) présentent à chaque fois des saillies (21, 23),
1.3.5 les maxima (25, 27) des saillies (21, 23) sur les côtés respectifs des flasques (17, 19) se trouvent à chaque fois dans un plan (E), qui passe à chaque fois perpendiculairement à la première surface supérieure principale (5),
1.4 sur la deuxième surface supérieure principale (7) sont constitués deuxièmes moyens de serrage (37) pour la liaison effectuant serrage du moyen de liaison avec un profil creux (101, 201), les deuxièmes moyens de serrage (37) étant disposés symétriquement aux premiers moyens de serrage (15),
1.5 la plaque de base (3) présente au moins une encoche (9, 11) dans la zone dans laquelle les rainures (103, 105, 203, 205) des deux profils creux (101, 201) reliables entre eux par le moyen de liaison sont alignées les unes avec les autres.

2. Moyen de liaison selon au moins une quelconque des revendications précédentes pour lequel la plaque de base (3) est constituée en forme de H.

3. Moyen de liaison selon la revendication 1 qui est constitué comme une pièce en matière plastique moulée par injection monobloc.

4. Moyen de liaison selon au moins une quelconque des revendications précédentes pour lequel la première et la deuxième surface supérieure principale (5, 7) sont parallèles l'une à l'autre.

5. Moyen de liaison selon au moins une quelconque des revendications précédentes pour lequel les deux plans (E) du premier moyen de serrage (15) dans lequel se trouvent à chaque fois les maxima (25, 27) des saillies (21, 23), sont parallèles l'un à l'autre.

6. Moyen de liaison selon au moins une quelconque des revendications précédentes pour lequel les saillies (21, 23) sont constituées de façon élastique.

7. Moyen de liaison selon au moins une quelconque des revendications précédentes pour lequel les maxima (25, 27) des saillies (21, 23) forment des arêtes (25, 27) qui sont parallèles à la surface supérieure principale (5, 7) respective.

8. Moyen de liaison selon au moins une quelconque des revendications précédentes pour lequel les flasques (17, 19) du premier moyen de serrage (15) et du deuxième moyen de serrage (37) peuvent être déplacés l'un sur l'autre à chaque fois en surmontant une force élastique.

9. Moyen de liaison selon au moins une quelconque des revendications précédentes pour lequel les flasques (17, 19) présentent un moyen de renfort (33, 35) sur leurs côtés tournés l'un vers l'autre.

10. Système à profil creux pour une installation solaire comprenant des moyens de liaisons (1) selon au moins une quelconque des revendications précédentes et profiles creux (101, 201) qui peuvent être reliés l'un à l'autre par les moyens de liaisons (1).
